Europäisches Patentamt

European Patent Office

Office européen des brevets

(11) Veröffentlichungsnummer : **0 090 384**
**B1**

(12) # EUROPÄISCHE PATENTSCHRIFT

(45) Veröffentlichungstag der Patentschrift :
12.11.86

(21) Anmeldenummer : 83103012.7

(22) Anmeldetag : 26.03.83

(51) Int. Cl.⁴ : **C 09 K 3/12**, F 16 L 55/16

(54) Mittel, Verfahren und Vorrichtung zum Innenabdichten von Rohrleitungen.

(30) Priorität : 30.03.82 DE 3211623

(43) Veröffentlichungstag der Anmeldung :
05.10.83 Patentblatt 83/40

(45) Bekanntmachung des Hinweises auf die Patenterteilung : 12.11.86 Patentblatt 86/46

(84) Benannte Vertragsstaaten :
AT BE CH DE FR GB LI LU NL

(56) Entgegenhaltungen :
CH-A- 63 698
DD-A- 128 209
DE-B- 2 361 293
ULLMANNS ENCYCLOPÄDIE DER TECHNISCHEN CHEMIE, 4. Auflage, Band 15, 1978 VERLAG CHEMIE, Weinheim-New York Seite 611
Das Gas und Wasserfach 119 (1978) Heft 32-37
Das Gas und Wasserfach 126 (1985) Heft 63-67

(73) Patentinhaber : diga - die gasheizung GmbH
Eckenbergstrasse 54 - 58
D-4300 Essen 13 (DE)

(72) Erfinder : Die Erfinder haben auf ihre Nennung verzichtet

## Beschreibung

Die Erfindung betrifft ein Mittel zum Innenabdichten von Rohrleitungen, insbesondere von Hausgasleitungen, welches ein Lösungsmittel, ein Bindemittel und ein Pigment enthält. Ferner betrifft die Erfindung ein Verfahren zum Herstellen des Mittels, ein Verfahren zum Innenabdichten von Rohrleitungen und eine Vorrichtung zum Durchführen des letztgenannten Verfahrens.

Aus der DE-AS 2 361 293 sind Mittel der eingangs genannten Art bekannt. Angesprochen werden dort lösungsmittelhaltige Pigmentkonzentrate, die transparente Eisenoxidpigmente und Alkydharze enthalten. Angestrebt wird dabei aus optischen Gründen ein hoher Pigmentgehalt in Verbindung mit günstiger Verteilbarkeit und guter Lagerstabilität.

Das Anwendungsgebiet der Erfindung und die damit verbundenen Probleme finden sich in diesem Stande der Technik nicht. Sie sind vielmehr in der DE-Veröffentlichung « Methoden und bisherige Erfahrungen der nachträglichen Innenabdichtung von Gas-Innenleitungen » (gwf 1978, Heft 1) beschrieben.

Weist eine Rohrleitung, insbesondere eine Hausgasleitung, Leckmengen auf, die ein vorgegebenes Maß überschreiten, so wird eine grundlegende Reparatur erforderlich. Liegen die Leckmengen hingegen in dem Bereich zwischen dieser Grenze und der der unbeschränkten Gebrauchstauglichkeit, so kommt eine Sanierung der Rohrleitung durch Innenabdichtung in Frage.

Ein hierfür verwendetes bekanntes Mittel ist eine wässerige Dispersion, deren Feststoffe sich ablagern und anschließend austrocknen. Hierbei entstehen nach dem ersten Arbeitsgang Risse, die durch einen zweiten Arbeitsgang mit entsprechendem Material- und Arbeitsaufwand geschlossen werden müssen.

Der Erfindung liegt dementsprechend die Aufgabe zugrunde, eine Möglichkeit dafür zu schaffen, eine wirksame Innenabdichtung bereits durch eine einmalige Behandlung zu erzielen.

Zur Lösung dieser Aufgabe ist das erfindungsgemäße Mittel dadurch gekennzeichnet, daß das Lösungsmittel ein technischer Alkohol, das Bindemittel Polyvinylbutyral und Epoxydharz-Weichmacher sowie das Pigment Kalzium-Magnesium-Silikat ist.

In « Ullmanns Enzyklopädie der Technischen Chemie, 4. Auflage, Band 15, 1978, Siete 611 » sind zwar allgemein die Eigenschaften und Anwendungsmöglichkeiten von Polyvinylbutyral beschrieben, auf das vorstehend genannte Anwendungsgebiet und die damit verbundene Problematik wird jedoch nicht eingegangen. Das neue Mittel vereint in sich folgende für den Anwendungszweck vorteilhafte Eigenschaften :

Das Mittel läßt sich gut verarbeiten. Es besitzt ein hohes Penetrationsvermögen und dringt daher sehr gut in die Undichtigkeiten ein, selbst wenn diese beispielsweise tief in den Gewindegängen von Muffen und dergleichen liegen. Beim Verdunsten des Lösungsmittels bildet das Mittel einen geschlossenen, gasdichten Film, der ein gewisses Maß an Elastizität besitzt. Er haftet gut, und zwar selbst beim Auftreten von Vibrationen. Dabei ist der Film alterungsbeständig, so daß er seine obengenannten Eigenschaften praktisch unbegrenzt beibehält. Übermäßige Schrumpfungen treten ebenfalls nicht auf.

Das Mittel ist weiterhin resistent gegen Kondensate, vor allem gegen Isooktan. Zu erwähnen ist noch, daß sich das Mittel nicht aggressiv gegen Rohre und Dichtungen verhält. Es ist sogar korrosionsschützend und außerdem physiologisch völlig unbedenklich.

Das Mittel besitzt ferner eine sehr gute Dauerelastizität. Außerdem lassen sich auch lange Zeit nach dem Aushärten des Mittels Rohrverbindungsstellen mit handelsüblichen Werkzeugen wieder lösen, und zwar ohne daß es zu Gewindebeschädigungen kommt.

Es wurde gefunden, daß Polyvinylbutyral und Weichmacher vorzugsweise im Mengenverhältnis 2 : 1 stehen.

Vorzugsweise enthält das Mittel 40-60 Gew.% Lösungsmittel, 35-45 Gew.% Bindemittel und 5-10 Gew.% Pigment.

In der Praxis besonders bewährt hat sich eine Zusammensetzung, bei der das Mittel 58 Gew.% Lösungsmittel, 35 Gew.% Bindemittel und 7 Gew.% Pigment enthält.

Die obigen Prozentangaben beziehen sich auf den Arbeitszustand.

Das nach der Erfindung ferner geschaffene Verfahren zum Herstellen des erfindungsgemäßen Mittels ist dadurch gekennzeichnet, daß das Bindemittel unter Rühren heiß im Lösungsmittel gelöst, diese Lösung sodann abgekühlt und anschließend das Pigment eindispergiert wird. Überraschenderweise läßt sich so ein Mittel mit hohem Anteil an Festkörpern, d. h. an Bindemittel und Pigment herstellen. Das Abdichtvermögen wird dadurch besonders gut.

Als ganz besonders günstig hat es sich herausgestellt, daß erst das Polyvinylbutyral und anschließend der Epoxydharz-Weichermacher in das heiße Lösungsmittel eingerührt wird.

Das nach der Erfindung weiterhin geschaffene Verfahren zum Innenabdichten von Rohrleitungen, insbesondere von Hausgasleitungen, ist dadurch gekennzeichnet, daß das erfindungsgemäße Mittel in an sich bekannter Weise von unten in die abzudichtende Rohrleitung eingefüllt, dort einige Zeit unter Druck gesetzt (vorzugsweise ca. 30 Min. unter ca. 6 bar) und anschließend unten abgezogen wird, woraufhin man erfindungsgemäß von oben einen Körper aus elastisch kompressiblem Material durch die Leitung hindurchbläst.

Dadurch wird in zuverlässiger Weise zum einen die Filmbildung erzielt und zum anderen das überschüssige Mittel anschließend ausgetragen.

Zum Antrieb des elastisch kompressiblen Körpers dient insbesondere Stickstoff.

Vorzugsweise wird die Rohrleitung nach dem Austritt des elastisch kompressiblen Körpers von unten abgesaugt. Dies fördert den Austritt des Lösungsmittels und damit die Verfestigung des Films. Auch verhindert man, sofern die Rohrleitung alsbald wieder in Betrieb genommen wird, daß das Lösungsmittel in das transportierte Medium gelangt. Zur Vermeidung von Geruchsbelästigungen führt man den Auslaßt des Sauggebläses ins Freie.

Vorteilhafterweise wird als elastisch kompressibler Körper ein Kunststoffschwamm verwendet. Dieses Material ist billig und steht in beliebigen Größen zur Verfügung. Auch arbeitet es absolut zuverlässig, insbesondere weil es sich auch erheblichen Durchmesseränderungen und Umlenkungen der Rohrleitung ohne weiteres anpaßt.

Die nach der Erfindung außerdem geschaffene Vorrichtung zum Durchführen des erfindungsgemäßen Abdichtverfahrens, die einen das Mittel aufnehmenden, mit einem Druckgas beaufschlagbaren Behälter umfaßt, der einen Auslaß zum Füllen der Rohrleitung aufweist, ist gekennzeichnet durch einen Einlaß größeren Querschnitts zum Entleeren der Rohrleitung, wobei unterhalb des Einlasses ein Sieb zum Auffangen des elastisch kompressiblen Körpers angeordnet ist.

Ein und derselbe Behälter dient also zum Füllen und später zum Entleeren der Rohrleitung. Seine Druckbeaufschlagung erfolgt vorzugsweise mit Stickstoff. Durch den vergrößerten Querschnitt des Einlasses wird dafür gesorgt, daß der Kunststoffschwamm ohne weiteres aus der Rohrleitung austreten kann. Das Sieb hindert dann den Kunststoffschwamm am Herabfallen in den Behälter.

Die erfindungsgemäße Vorrichtung kann ferner dadurch gekennzeichnet sein, daß der Einlaß größeren Querschnitts zusammen mit einem Überdruckventil und einer Druckgas-Leitung an einem gemeinsamen Deckel angeordnet ist. Das Überdruckventil, das beispielsweise bei Einsatz von Stickstoff vorgeschrieben sein kann, wird somit bei jeder Befüllung des Behälters zugänglich und kann demnach leicht gewartet werden. Dadurch wird der Gefahr eines Verklebens durch das im Behälter befindliche Mittel begegnet.

Die Erfindung wird im folgenden anhand von bevorzugten Ausführungsbeispielen der Vorrichtung im Zusammenhang mit der beiliegenden Zeichnung näher erläutert. Die Zeichnung zeigt in :

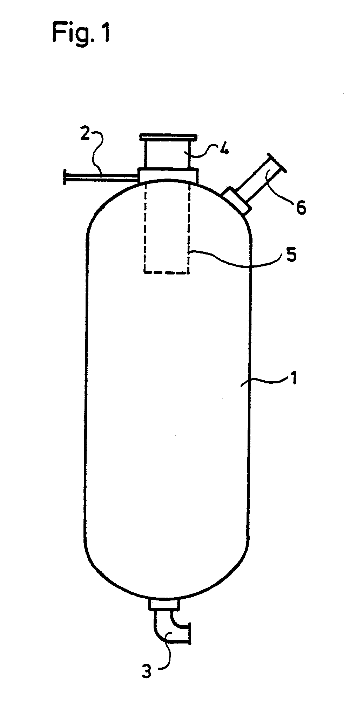

Figur 1    eine schematische Seitenansicht der Vorrichtung ;

Figur 2    einen für die Vorrichtung geeigneten Deckel.

Wie dargestellt, ist ein Behälter 1 vorgesehen, der das erfindungsgemäße Mittel enthält. Der Behälter 1 kann über eine Leitung 2 mit Druckgas, insbesondere mit Stickstoff, beaufschlagt werden.

Ein Auslaß 3 dient dazu, die abzudichtende Rohrleitung von unten mit dem erfindungsgemäßen Mittel zu füllen. Ist der Füllvorgang beendet, so wird das Mittel in der Rohrleitung für 30 Minuten unter einem Druck von 6 bar gehalten.

Anschließend wird der Druck aufgehoben, und man schließt anstelle des Auslasses 3 einen Einlaß 4 an die Rohrleitung an. Durch diesen Einlaß fließt das überschüssige Mittel in den Behälter 1 zurück. Um dabei Geruchsbelästigungen zu vermeiden, ist der Behälter mit einer Entlüftung 6 versehen, die ins Freie führt.

Zur Entfernung der Reste des Mittels wird von oben ein elastisch kompressibler Kunststoffschwamm durch die Rohrleitung hindurchgeblasen. Als Antrieb dient ebenfalls vorzugsweise Stickstoff. Wenn der Kunststoffschwamm die Rohrleitung verläßt, gelangt er durch den Einlaß 4 in den Behälter 1 und wird dort unterhalb des Einlasses von einem Sieb 5 aufgefangen.

Es schließt sich sodann das Absaugen der Rohrleitung an.

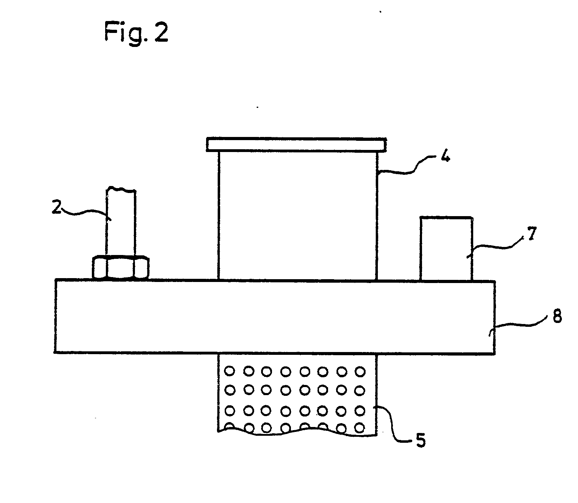

Gemäß Fig. 2 ist ein Überdruckventil 7 vorgesehen, das zusammen mit dem Einlaß 4 und der Leitung 2 an einem gemeinsamen Deckel 8 für den Behälter 1 sitzt.

Will man frisches Mittel in den Behälter 1 einfüllen, so geschieht dies durch den Einlaß 4 oder nach Abnahme des Deckels 8.

**Patentansprüche**

1. Mittel zum Innenabdichten von Rohrleitungen, insbesondere von Hausgasleitungen, welches ein Lösungsmittel, ein Bindemittel und ein Pigment enthält, dadurch gekennzeichnet, daß das Lösungsmittel ein technischer Alkohol, das Bindemittel Polyvinylbutyral und Epoxydharz-Weichmacher sowie das Pigment Kalcium-Magnesium-Silikat ist.

2. Mittel nach Anspruch 1, dadurch gekennzeichnet, daß Polyvinylbutyral und Weichmacher im Mengenverhältnis 2 : 1 stehen.

3. Mittel nach Anspruch 1 oder 2, dadurch gekennzeichnet, daß es 40-60 Gew.-% Lösungsmittel, 35-45 Gew.-% Bindemittel und 5-10 Gew.-% Pigment enthält.

4. Mittel nach einem der Ansprüche 1 bis 3, dadurch gekennzeichnet, daß es 58 Gew.-% Lösungsmittel, 35 Gew.-% Bindemittel und 7 Gew.-% Pigment enthält.

5. Verfahren zum Herstellen des Mittels nach einem der Ansprüche 1 bis 4, dadurch gekennzeichnet, daß das Bindemittel unter Rühren heiß im Lösungsmittel gelöst, diese Lösung sodann abgekühlt und anschließend das Pigment eindispergiert wird.

6. Verfahren nach Anspruch 5, dadurch gekennzeichnet, daß erst das Polyvinylbutyral und anschließend der Epoxydharz-Weichmacher in das heiße Lösungsmittel eingerührt wird.

7. Verfahren zum Innenabdichten von Rohrleitungen, insbesondere von Hausgasleitungen, dadurch gekennzeichnet, daß das Mittel nach einem der Ansprüche 1 bis 4 in an sich bekannter Weise von unten in die abzudichtende Rohrleitung eingefüllt, dort einige Zeit unter Druck gesetzt und anschließend unten abgezogen wird, und daß man daraufhin von oben einen Körper aus elastisch kompressiblem Material durch die Leitung hindurchbläst.

8. Verfahren nach Anspruch 7, dadurch gekennzeichnet, daß die Rohrleitung nach dem Austritt des elastisch kompressiblen Körpers von unten abgesaugt wird.

9. Verfahren nach einem der Ansprüche 7 oder 8, dadurch gekennzeichnet, daß als elastisch kompressibler Körper ein Kunststoffschwamm verwendet wird.

10. Verfahren nach einem der Ansprüche 7 bis 9, dadurch gekennzeichnet, daß das Mittel in der Rohrleitung für ca. 30 Min. unter einem Druck von ca. 6 bar gehalten wird.

11. Vorrichtung zum Durchführen des Verfahrens nach einem der Ansprüche 7 bis 10, mit einem das Mittel aufnehmenden, mit einem Druckgas beaufschlagbaren Behälter, der einen Auslaß zum Füllen der Rohrleitung aufweist, gekennzeichnet durch einen Einlaß (4) größeren Querschnitts zum Entleeren der Rohrleitung, wobei unterhalb des Einlasses (4) ein Sieb (5) zum Auffangen des elastisch kompressiblen Körpers angeordnet ist.

12. Vorrichtung nach Anspruch 11, dadurch gekennzeichnet, daß der Einlaß (4) größeren Querschnitts zusammen mit einem Überdruckventil (7) und einer Druckgas-Leitung (2) an einem gemeinsamen Deckel (8) angeordnet ist.

## Claims

1. An agent for the internal sealing of pipes, such as gas installation pipework, containing a solvent, a bonding agent and a pigment characterized in that said solvent is a commercial alcohol, said bonding agent is polyvinyl butyral and an epoxy resin softener and said pigment is a calcium magnesium silicate.

2. An agent according to claim 1 characterized in that said polyvinyl butyral and said softener are blended in a ratio of 2 : 1.

3. An agent according to claim 1 or 2 characterized in that said agent contains 40 to 60 % by weight of solvent, 35 to 45 % by weight of bonding agent and 5 to 10 % by weight of pigment.

4. An agent according to any of claims 1 through 3 characterized in that said agent contains 58 % by weight of solvent, 35 % by weight of bonding agent and 7 % by weight of pigment.

5. A method for the production of the agent according to any of claims 1 through 4 characterized in that said bonding agent is dissolved in the solvent by stirring while said solvent is hot and said solution is thereupon cooled and said pigment is thereupon mixed in said solution by dispersion.

6. A method according to claim 5 characterized in that said polyvinyl butyral is first dissolved in said hot solvent by stirring and said epoxy resin softener is thereafter dissolved in said hot solution by stirring.

7. A method for the internal sealing of pipes such as gas installation pipework characterized in that the agent according to any of claims 1 through 4 is bottom-filled into the pipe to be sealed by known methods and said agent is thereupon pressurized for a certain period of time and then extracted from the bottom of said pipe and a body made of a compressible elastic material is thereafter blown through said pipe.

8. A method according to claim 7 characterized in that fluid remaining in said pipe is bottom-extracted from said pipe following the removal of said compressible elastic body from said pipe.

9. A method according to any of claims 7 or 8 characterized in that said compressible elastic body is a synthetic sponge.

10. A method according to any of claims 7 through 9 characterized in that said agent is pressurized in said pipe to a pressure of some 6 bar for a period of some 30 minutes.

11. A device for the application of any of the methods according to any of claims 7 through 10 comprising a vessel for holding said agent designed for pressurization by a gas and having an outlet for filling said pipe characterized in that said vessel has an inlet with a cross-section which is larger than the cross-section of said outlet for emptying said pipe, a device for catching said compressible elastic body being arranged below said inlet.

12. A device according to claim 11 characterized in that said inlet, a pressure relief valve and a pressurizing gas line are arranged on a common cover.

## Revendications

1. Substance pour l'étanchéification interne de conduites, telles que les installations intérieures, contenant un solvant, un liant et un pigment, caractérisée par le fait que le solvant est un alcool commercial, le liant un polyvinylbutyral et un plastifiant en époxy, et le pigment un inosilicate.

2. Substance selon la revendication 1, caractérisée par le fait que le rapport volumétrique entre le polyvinylbutyral et le plastifiant est de 2 à 1.

3. Substance selon l'une des revendications 1 et 2, caractérisée par le fait qu'elle contient 40 à 60 % en poids de solvant, 35 à 45 % en poids de liant et 5 à 10 % en poids de pigment.

4. Substance selon l'une des revendications 1 à 3, caractérisée par le fait qu'elle contient 58 % en poids de solvant, 35 % en poids de liant et 7 % en poids de pigment.

5. Procédé de fabrication de la substance selon une des revendications 1 à 4, caractérisé par le fait que le liant est dissous dans le solvant chaud en remuant la solution, que ladite solution est refroidie et que, ensuite, le pigment est dispersé dans la solution.

6. Procédé selon la revendication 5, caractérisé par le fait que le polyvinylbutyral est ajouté au solvant chaud le premier et que le plastifiant en époxy est ajouté au solvant chaud en deuxième lieu.

7. Procédé pour l'étanchéification interne des conduites, telles que les installations intérieures, caractérisé par le fait que la substance selon l'une des revendications 1 à 4 est injectée de manière connue à la partie inférieure dans la conduite à étanchéifier, que ladite substance est maintenue dans la conduite pendant un certain temps sous pression et qu'elle est évacuée ensuite vers le bas, un corps en matériau élastique compressible étant ensuite passé à travers la conduite du haut vers le bas.

8. Procédé selon la revendication 7, caractérisé par le fait que la conduite est aspirée à partir de sa partie basse après le passage du corps élastique compressible.

9. Procédé selon l'une des revendications 7 ou 8, caractérisé par le fait qu'il est utilisé comme corps élastique compressible une éponge en matière plastique.

10. Procédé selon l'une des revendications 7 à 9, caractérisé par le fait que la substance est maintenue dans la conduite pour une période d'environ 30 minutes sous une pression d'environ 6 bar.

11. Dispositif pour l'application du procédé selon l'une des revendications 7 à 10, équipé d'un réservoir sous pression disposant d'une sortie pour le remplissage de la conduite, caractérisé par une entrée d'un diamètre suffisamment grand pour la purge de la conduite, un tamis étant disposé en dessous de ladite entrée pour recevoir le corps élastique compressible.

12. Dispositif selon la revendication 11, caractérisé par le fait que l'entrée d'un diamètre suffisamment grand, un détendeur contre l'excès de pression et une conduite de gaz sous pression sont disposés sur une couverture commune.

Fig. 1

Fig. 2